# EUROPÄISCHE PATENTSCHRIFT

(11) **EP 3 443 162 B1**
(45) Veröffentlichungstag und Bekanntmachung des Hinweises auf die Patenterteilung: **26.02.2020**
(21) Anmeldenummer: 17716864.8
(22) Anmeldetag: 10.04.2017
(51) Int. Cl.: D21F 7/08

(54) **PRESSBAND UND VERFAHREN ZU DESSEN HERSTELLUNG**
PRESS FABRIC AND METHOD FOR PRODUCING THE SAME
FEUTRE DE PRESSE ET PROCÉDÉ POUR SA FABRICATION

(30) Priorität: 15.04.2016 DE 102016206384
(43) Veröffentlichungstag der Anmeldung: 20.02.2019
(73) Patentinhaber: Voith Patent GmbH, 89522 Heidenheim (DE)
(72) Erfinder: EBERHARDT, Robert, 73479 Ellwangen (DE); GRASER, Siegfried, 89168 Niederstotzingen (DE)
(86) Internationale Anmeldenummer: PCT/EP2017/058501
(87) Internationale Veröffentlichungsnummer: WO 2017/178405

(56) Entgegenhaltungen:
- EP-A1- 1 688 536
- EP-A1- 2 128 334
- WO-A1-88/07929
- WO-A1-2016/058972
- DE-A1-102006 055 828
- US-A- 3 617 442

## Beschreibung

Die vorliegende Erfindung betrifft eine Bespannung in Form eines Pressbandes für eine Maschine zur Herstellung oder Verarbeitung einer Papierbahn gemäß dem Oberbegriff von Anspruch 1, sowie ein Verfahren zur Herstellung der Bespannung.

Bei der Herstellung von Faserstoffbahnen, speziell bei der Herstellung von Papierbahnen wird im sogenannten Former eine wässrige Faserstoffsuspension üblicherweise auf einem Formiersieb oder auch zwischen zwei Formiersieben initial entwässert, danach durch Pressen zwischen zwei Pressfilzen weiter entwässert und schließlich thermisch fertig getrocknet.

Für die Entwässerung in der Presse kommen heutzutage nahezu ausschließlich Pressfilze zum Einsatz, die eine gewebte Grundstruktur umfassen, auf die eine oder mehrere Lagen aus Vliesfasern aufgebracht sind. Insbesondere wird die papierberührende Seite des Pressfilzes durch eine feine Vliesfaserlage zur Verfügung gestellt.

Für derartige Filze ist ein reichhaltiger Stand der Technik bekannt. Beispielhaft sei hier die Europäische Patentanmeldung EP 2 072 668 A1 erwähnt. Auch in den hier beschriebenen Filzen wird die Bahnmaterialkontaktfläche durch eine Lage aus Fasermaterial bereitgestellt.

Doch obgleich dieser Aufbau seit langem verwendet wird, so birgt er doch einige Nachteile. Zum einen besteht die Gefahr, dass Faserstrukturen der Vlieslage, die mit dem Papier in Kontakt steht, durch den hohen Druck im Pressnip in die Papieroberfläche eingeprägt werden. Hierdurch kann es zu einer Qualitätsminderung des Papiers durch Filzmarkierungen kommen. Zum anderen ist seit langem bekannt, dass es nach der Entwässerung der Papierbahn im Pressnip zu einer sogenannten Rückbefeuchtung der Papierbahn kommt. Hierbei gelangt Wasser aus der papierberührenden Vlieslage zurück in die Papierbahn, wodurch die Entwässerungswirkung der Presse reduziert wird.

Jede der WO 88/07929 A1, DE 10 2006 055 828 A1, EP 2 128 334 A1 und US 3 167 442 A offenbart ein Pressband für eine Papiermaschine, das eine Grundstruktur und eine Polymerschaumlage aufweist, wobei die Polymerschaumlage die Papierseite bereitstellt.

Die EP 1 688 536 A1 offenbart eine Bespannung gemäß dem Oberbegriff des Anspruchs 1.

Es ist Aufgabe der Erfindung, eine Bespannung vorzuschlagen, die die Probleme des Standes der Technik überwindet oder abmindert.

Diese Aufgabe wird vollständig gelöst durch eine Bespannung in Form eines Pressbandes für eine Maschine zur Herstellung oder Verarbeitung einer Papierbahn gemäß Anspruch 1, sowie ein Verfahren zur Herstellung der Bespannung gemäß Anspruch 9.

Es wird eine Bespannung in Form eines Pressbandes für eine Maschine zur Herstellung oder Verarbeitung einer Papierbahn vorgeschlagen, wobei die Bespannung eine Papierseite und eine Laufseite aufweist. Die Bespannung umfasst eine Grundstruktur und zumindest eine weitere Struktur. Erfindungsgemäß ist vorgesehen, dass die zumindest eine weitere Struktur aus einer Lage aus Polymerschaum besteht oder diese umfasst, und diese Lage aus Polymerschaum die Papierseite der Bespannung bereitstellt.

Eine solche Lage aus Polymerschaum ist durch ihre Porenstruktur permeabel, so dass das Wasser aus der Papierbahn durch sie hindurch strömen kann. Jedoch weist die Oberfläche im Gegensatz zu einer Vlieslage keine Fasern oder Fasersegmente auf, die sich in der Papieroberfläche abdrücken können.

Weitere vorteilhafte Ausführungen des erfindungsgemäßen Pressbandes sind in den Unteransprüchen beschrieben.

In vorteilhaften Ausführungen der Erfindung weist die papierberührende Seite der Lage aus Polymerschaum außerhalb eines Pressnips eine geringere Kontaktfläche zur Papierbahn auf, als übliche Stapelfaser-Vlieslage basierte Pressfilze. Bei Verpressung in einem Pressnip hingegen können auch Materialanteile, die unter der obersten Porenlage liegen, zu Kontaktpunkten mit der Papierbahn werden. Hierdurch kann sich die Kontaktfläche zur Papierbahn deutlich vergrößern und wird dadurch häufig sogar größer sein, als bei konventionellen Pressfilzen mit papierberührender Vlieslage

Erfindungsgemäß weist die zumindest eine Lage aus Polymerschaum eine anisotrope Porenstruktur auf. Bei einer solchen anisotropen Struktur weicht die Form zumindest eines Großteils (häufig mehr als 50%, oder auch mehr als 80%) der einzelnen Poren von der isotropen Kugelform ab. So kann in einer vorteilhaften Ausführungsform vorgesehen sein, dass die Poren in Maschinenrichtung der Bespannung und in Querrichtung der Bespannung eine größere Ausdehnung aufweisen, als in der Dickenrichtung. Eine derartige Porenstruktur kann beispielsweise durch eine Komprimierung einer Schaumlage mit isotroper Porenstruktur erreicht werden. Häufig kann durch eine solche anisotrope Porenstruktur das Wasser schnell von der Papierbahn weg Richtung Grundstruktur geleitet werden. Auch stellt die Schaumlage dadurch üblicherweise weniger Speichervolumen zur Verfügung.

In weiteren vorteilhaften Ausführungen kann vorgesehen sein, dass die Bespannung zumindest eine zusätzliche Funktionsstruktur umfasst, die zwischen der Grundstruktur und der Lage aus Polymerschaum oder an der papierabgewandten Seite der Grundstruktur angeordnet ist. Bei einer derartigen zusätzlichen Funktionsstruktur kann es sich beispielsweise um eine Lage handeln, welche Vliesfasern umfasst oder daraus besteht. Es kann sich bei der zusätzliche Funktionsstruktur jedoch auch um andere Strukturen handeln, wie beispielsweise eine weitere Schaumlage, eine Folie, eine Membran oder ähnliches. In besonders vorteilhaften Ausführungen können durchaus auch mehrere zusätzliche Funktionsstrukturen vorgesehen sein, insbesondere mehrere Vliesfaserlagen.

In weiteren vorteilhaften Ausführungen kann vorgesehen sein, dass auf beiden Seiten der Grundstruktur, also in Richtung der Faserstoffbahn und in Richtung der Maschine jeweils zumindest eine Lage aus Polymerschaum vorgesehen ist.

In anderen, vorteilhaften Ausführungen kann vorgesehen sein, dass nur auf einer Seite der Grundstruktur, nämlich in Richtung der Papierbahn eine oder mehrere Lagen aus Polymerschaum vorgesehen sind.

Erfindungsgemäß wird bei einer Druckbelastung der Bespannung von 3 MPa die Lage aus Polymerschaum in Dickenrichtung um mehr als 30%, bevorzugt um mehr als 40%, besonders bevorzugt um mehr als 50% komprimiert, verglichen mit der Ausgangsdicke bei einer Druckbelastung von 0.1 MPa.

Insbesondere kann auch vorgesehen sein, dass bei einer Druckbelastung der Bespannung von 5 MPa oder 8 MPa die Lage aus Polymerschaum in Dickenrichtung um mehr als 30%, bevorzugt um mehr als 40%, besonders bevorzugt um mehr als 50% komprimiert wird.

Die Dickenmessung einer Bespannung, bzw. der zugehörigen Lage aus Polymerschaum kann unter Druckbelastung beispielsweise derart erfolgen, dass eine Probe in einem Computertomograhphen oder anderen geeigneten bildgebenden Analysegeräten unter den gewünschten Druck gesetzt wird. Anhand der so erhaltenen Bilder lässt sich die Dicke der einzelnen Bestandteile der Bespannung sehr genau bestimmen.

Eine derartig ausgeführte Lage aus Polymerschaum kann für den Einsatz der Bespannung vorteilhaft sein. Der Bereich von 3 MPa bis 8 MPa stellt den Druckbereich dar, der üblicherweise in einem Pressnip erzeugt wird. Werden eine solche Bespannung zusammen mit einer darauf abgelegten Papierbahn - und ggf. noch einer weiteren Bespannung - durch einen Pressnip geführt, so wird dort ein Druck auf die Lage aus Polymerschaum ausgeübt, wodurch diese Lage gemäß dieser vorteilhaften Ausführung entsprechend komprimiert wird. Die angegebenen 0.1 MPa sollen eine typische Grundlast darstellen, die auch ohne Wirkung des Pressnips auf die Bespannung wirkt, z.B. bedingt durch das Gewicht der nassen Papierbahn etc. In einer besonders bevorzugten Ausführung der Bespannung ist die Lage aus Polymerschaum so ausgeführt, dass bei einer anschließenden Druckentlastung der Bespannung von 3 MPa (oder 5MPa oder 8 MPa) auf 0.1 MPa die Lage aus Polymerschaum im Wesentlichen wieder auf ihre Ausgangsdicke expandiert.

In besonders vorteilhaften Ausführungen der Bespannung kann die Kombination aus Kompression in einem Pressnip und anschließender Expansion nach dem Pressnip dazu führen, dass der Trockengehalt der Materialbahn erhöht, und die eingangs beschriebene Rückbefeuchtung deutlich reduziert wird. Dieser Effekt konnte überraschenderweise in Versuchen der Anmelderin beobachtet werden. In diesem Falle kann durch Komprimierung der Schaumlage in einem Pressnip das Wasser aufgrund des verkürzten Entwässerungsweges schneller abgeführt werden. Zudem ändern sich durch die Expansion nach dem Pressnip die Porengröße und das Porenvolumen der Schaumlage. Dadurch kann das in den Poren und der Grundstruktur befindliche Wasser nur noch erschwert zurück in die Materialbahn dringen. Diese beiden Effekte können einzeln oder in Kombination zu einer deutlichen Steigerung des Trockengehalts der Materialbahn führen.

In einer weiteren vorteilhaften Ausführungsform kann die Lage aus Polymerschaum aus einem Elastomer, insbesondere einem Polyurethan bestehen, oder dieses umfassen. So kann insbesondere ein sogenannter Polyurethan-Weichschaum, und hier bevorzugt ein retikulierter Polyurethan Weichschaum zum Einsatz kommen. Jedoch können erfindungsgemäß auch andere Materialien für die Lage aus Polymerschaum verwendet werden, wie z.B. ein Silikon, Polyester, Polyether etc.

In bevorzugten Ausführungen kann die Lage aus Polymerschaum ein Flächengewicht zwischen 60 g/m² und 300 g/m², bis hin zu 500g/m² oder mehr aufweisen.

In weiteren bevorzugten Ausführungen kann die Lage aus Polymerschaum eine Rohdichte zwischen 100 kg/m³ und 700 kg/m³ aufweisen.

Die Grundstruktur der Bespannung kann vorteilhafterweise ein Gewebe, ein Gelege oder eine permeable Folienstruktur umfassen oder daraus bestehen.

Insbesondere kann bei der Verwendung eines Gewebes ein einlagiges oder mehrlagiges Gewebe zum Einsatz kommen.

Vorteilhafterweise kann die Grundstruktur eine Permeabilität von mehr als 1.27 m³/m^{2*}s (250 cfm), insbesondere mehr als 2.54 m³/m^{2*}s (500 cfm), aufweisen. Prinzipiell können aber auch Grundstrukturen mit einer niedrigeren Permeabilität eingesetzt werden.

Erfindungsgemäß weist die Bespannung eine Permeabilität zwischen 0.0508 m³/m^{2*}s (10 cfm) und 1.27 m³/m^{2*}s (250 cfm), insbesondere zwischen 0.127 m³/m^{2*}s (25 cfm) und 0.762 m³/m^{2*}s (150 cfm) auf.

Die Grundstruktur ebenso wie die gesamte Bespannung sind vorteilhafterweise für Wasser und für Gas permeabel. Zur Charakterisierung der Permeabilität hat sich jedoch die Bestimmung der Permeablität mittels der Durchströmung mit Luft etabliert. Die Einheit cfm=Cubic Foot per Minute ist hierbei eine in der Bewertung der Permeabilität von Bespannungen übliche Einheit. Hierbei entsprechen 100 cfm rund 0.508 m³/m²*s.

Eine Bespannung gemäß der vorliegenden Erfindung wird als Pressband in der Pressenpartie einer Maschine zur Herstellung einer Faserstoffbahn - insbesondere einer Papier-, Karton-, Tissue- oder Zellstofffbahn- verwendet. In einer solchen Pressenpartie können ein oder mehrere erfindungsgemäße Bespannungen verwendet werden.

Hinsichtlich des Verfahrens wird die Aufgabe gelöst durch ein Verfahren zur Herstellung der erfindungsgemäßen Bespannung, umfassend die Schritte:
a) Bereitstellen einer Grundstruktur,
b) Bereitstellen zumindest einer weiteren Struktur, wobei diese weitere Struktur aus einer Lage aus Polymerschaum besteht oder diese umfasst,
c) Verbinden der zumindest einen weiteren Struktur und der Grundstruktur, dergestalt, dass diese weiteren Struktur die papierberührende Seite der Bespannung zur Verfügung stellt,
d) Kompaktieren der Lage aus Polymerschaum unter dem Einfluss von Druck und/oder Temperatur.

Der Verfahrensschritt des Kompaktierens erlaubt es, bei der Herstellung der Bespannung eine Vielzahl von Eigenschaften der Lage aus Polymerschaum gezielt an die Anforderungen anzupassen, die an die Bespannung im Einsatz gestellt werden. Beispielhaft und nicht abschließend seien hier erwähnt:
Anpassung der Dicke der Lage aus Polymerschaum

Änderung der Anisotropie der Porenstruktur. Durch das Kompaktieren kann die Ausdehnung zumindest eines Großteils der Poren in Dickenrichtung verkleinert werden. Dadurch kann auch eine Anpassung der Permeabilität der Lage aus Polymerschaum erzielt werden.

Weiterhin kann durch das Kompaktieren auch die Komprimierbarkeit bzw. die Stauchhärte und/oder die Elastizität der Lage aus Polymerschaum angepasst werden.

Somit kann beispielsweise unter Verwendung von kommerziell erhältlichen standardisierten Polymerschäumen eine hohe Bandbreite von speziell angepassten Bespannungen hergestellt werden.

Ein weiterer Effekt, der durch eine Kompaktierung erzielt werden kann, ist eine weitere Verbesserung der Oberflächeneigenschaften der papierberührenden Seite der Bespannung. So kann es erreicht werden, dass durch die Einwirkung von Druck und/oder Temperatur das Material der Schaumlage oberflächlich angeschmolzen wird. Dadurch können sich berührende Schaumelemente bzw. Stege stoffschlüssig miteinander verbinden. So entstehende Oberflächen können eine gesteigerte mechanische Stabilität bzw. Abriebfestigkeit aufweisen.

Es besteht auch die Möglichkeit, offenporige Schäume mit größeren Porendurchmessern zu verwenden, welche dann durch die Kompaktierung dauerhaft gestaucht werden. Durch dieses Stauchen wirken auch Zellstege als Kontaktpunkte zur Papierbahn, welche vor der Kompaktierung unterhalb der oberen Porenlage lagen. Dies führt zu einer Vergrößerung der Kontaktfläche mit der Papierbahn, im Vergleich zum nicht kompaktierten Schaum.

Die kompaktierten Schäume weisen üblicherweise eine hohe Permeabilität bei geringer Ausdehnung in Dickenrichtung auf.

Weitere vorteilhafte Ausführungen des Verfahrens sind in den Unteransprüchen beschrieben. Das Kompaktieren kann beispielsweise durch Verpressen bei erhöhter Temperatur mit anschließendem Abkühlen erfolgen. Ein Abkühlen kann unter Beibehaltung des Kompaktierungsdrucks erfolgen. Teilweise kann darauf aber auch ganz verzichtet werden, bzw. das Abkühlen kann unter einem verminderten Druck (<90% des Kompaktierungsdrucks, insbesondere < 75% des Kompaktierungsdrucks) erfolgen.

Geeignete Vorrichtungen zum Realisieren einer Verpressung können sogenannte Doppelbandpressen darstellen, die häufig Heiz- und Kühlzonen aufweisen. Vorteilhafte Temperaturen für die Kompaktierung können sich bei unterschiedlichen Anwendungen und Materialien unterscheiden. Bei bevorzugten Anwendungen, wie z.B. von Polyurethan Weichschäumen können die benötigten Temperaturen im Bereich zwischen 150°C und 200°C liegen.

Insbesondere wenn die Kompaktierung nach dem Verbinden der Schaumlage mit der Grundstruktur erfolgt besteht eine weitere vorteilhafte Möglichkeit der Kompaktierung darin, die Bespannung durch einen Kalander laufen zu lassen. Hierbei kann der Kalander einen Walzennip aufweisen wobei zumindest eine Walze beheizt ist. Vorteilhafterweise ist dabei häufig die Walze beheizt, welche mit der Schaumlage in Kontakt kommt.

Weiterhin kann vorteilhafterweise vorgesehen sein, dass das Verfahren zusätzlich den Schritt umfasst:
b1) Bereitstellen einer zusätzlichen Funktionsstruktur und Anordnen dieser zusätzlichen Funktionsstruktur zwischen der Grundstruktur und der Lage aus Polymerschaum oder an der papierabgewandten Seite der Grundstruktur.

Wie bereits in der Beschreibung der Bespannung diskutiert, können auch mehrere zusätzliche Funktionsstrukturen vorgesehen werden. Bei den zusätzlichen Funktionsstrukturen kann es sich um eine Vliesfaserlage, eine Folie, eine Membran, eine weitere Schaumlage oder ähnliches handeln.

Für das Verbinden der Grundstruktur mit der Lage aus Polymerschaum und gegebenenfalls weiteren funktionalen Lagen sind verschiedene Verfahren möglich. Beispielsweise kann die Verbindung durch Vernadeln, Verkleben oder Verschweißen, insbesondere Lasertransmissionsschweißen sowie eine Kombination verschiedener geeigneter Verfahren erfolgen.

Die Schritte des vorgeschlagenen Verfahrens müssen nicht zwingend in einer festen Reihenfolge durchgeführt werden. Insbesondere kann das Kompaktieren der Lage aus Polymerschaum vor oder nach dem Verbinden der zumindest einen weiteren Struktur mit der Grundstruktur erfolgen. Auch ein mehrfaches Kompaktieren der Lage aus Polymerschaum kann vorgesehen sein. Besonders vorteilhafterweise kann sowohl vor dem Verbinden als auch nach dem Verbinden eine Kompaktierung vorgenommen werden.

Üblicherweise weisen geeignete, kommerziell erhältliche Polymerschäume, wie z.B. Polyurethan Weichschäume Dicken im Bereich von 2.5mm bis 9mm, insbesondere zwischen 3.5mm und 7mm auf. Derartige Schäume können aus Ausgangsmaterial verwendet, und in dem erfindungsgemäßen Verfahren dann weiter kompaktiert werden.

In besonders bevorzugten Ausführungen des Verfahrens beträgt die Dicke der Lage aus Polymerschaum nach dem Kompaktieren weniger als 30%, bevorzugt weniger als 25%, besonders bevorzugt weniger als 20% der Ausgangsdicke der Schaumlage.

Bzgl. der Bestimmung der Dicke der Schäume sei angemerkt, dass diese -im Gegensatz zu der Bestimmung der Komprimierbarkeit und Elastizität der Bespannung - drucklos ermittelt werden, also ohne Anlegen einer Grundlast von 0.1 MPa.

Erfolgt die Kompaktierung der Lage aus Polymerschaum nach dem Befestigen an der Grundstruktur, so kann es vorkommen, dass dadurch Teile der Schaumlage in Vertiefungen der Tragstruktur eindringen bzw. eingedrückt werden. Dieser Anteil wird nicht zur Bestimmung der Dicke der Schaumlage herangezogen.

In weiteren vorteilhaften Ausführungen kann der Polymerschaum vor dem Kompaktieren eine Porendichte zwischen 4 bis 31,5 Poren pro Zentimeter (10 und 80 Poren pro Inch (PPI)), vorzugsweise zwischen 12 und 24 Poren pro Zentimeter (30 und 60 PPI) aufweisen.

PPI ist hierbei eine international übliche Maßeinheit für die Durchlässigkeit poröser Materialien und beschreibt eine lineare Strukturdichte.

In weiteren vorteilhaften Ausführungen weist der Polymerschaum vor dem Kompaktieren eine Rohdichte zwischen 15 und 60kg/m³, bevorzugt zwischen pro 25 und 35 kg/m³auf.

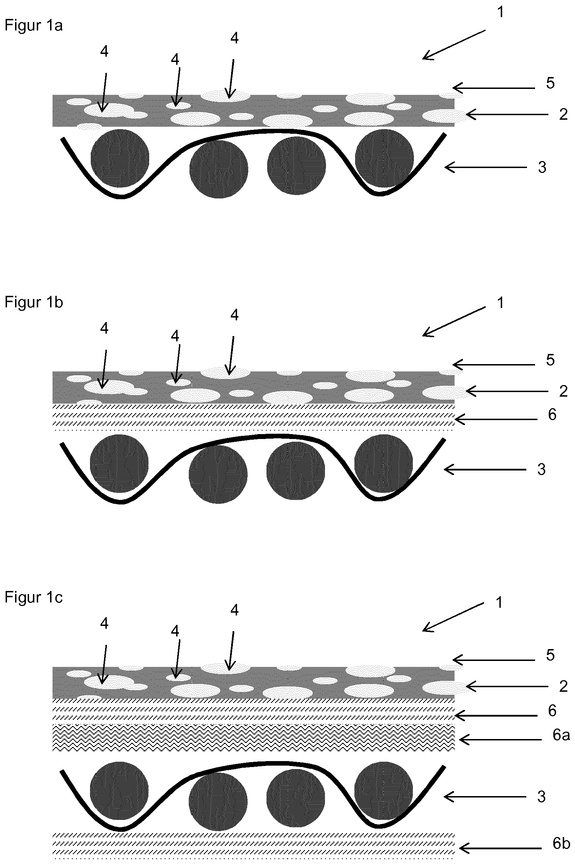

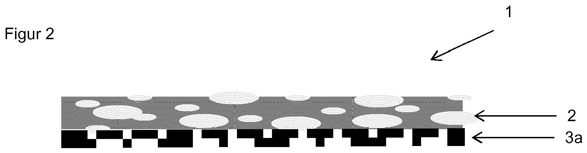

Im Folgenden wird die Erfindung anhand schematischer Figuren weiter erläutert. Figuren 1a, 1b, 1c und 2 zeigen zwei Ausführungen einer Bespannung gemäß der Erfindung.

In Figur 1 ist grob schematisch der Aufbau einer Bespannung 1 in Form eines Pressbandes gezeigt. In der hier gezeigten Ausführung umfasst die Bespannung 1 ein Gewebe 3, das die Grundstruktur 3 zur Verfügung stellt. Auf dieser Grundstruktur 3 ist eine Lage aus Polymerschaum 2 befestigt. Diese kann beispielsweise aus einem Polyurethan Weichschaum bestehen. Diese Lage aus Polymerschaum 2 stellt auch die papierberührende Seite der Bespannung 5 zur Verfügung. Die Poren 4 der Lage aus Polymerschaum 2 sind in der in Figur 1 gezeigten Bespannung anisotrop. Die kann beispielsweise dadurch realisisert werden, dass ein standard Polymerschaum, welcher üblicherweise isotrope Poren aufweist, durch einen Kompaktierungsschritt mittels Druck und/oder Temperatur kompaktiert worden ist. Dadurch ändert sich neben der Dicke der Schaumlage 2 auch die Form der Poren 4. Sie werden in Dickenrichtung deformiert.

An einem exemplarischen Beispiel soll ein mögliches Herstellungsverfahren für eine Bespannung wie in Figur 1 gezeigt erläutert werden. In dem Beispiel wird zuerst eine gewebte Grundstruktur 3 zur Verfügung gestellt wird. Diese kann aus Polyesterfilamenten gewebt sein. Zudem wird ein Schaum in Form eines retikulierten Polyurethan Weichschaums zur Verfügung gestellt. Dieser weist im Beispiel eine Dicke von 4mm und eine Porendichte von 17,7 Poren pro Zentimeter (45 PPI) auf. Ein geeignetes Verfahren zum Verbinden der Lagen aus Polymerschaum 2 mit der Grundstruktur 3 stellt das Lasertransmissionsschweißen dar. Im Beispiel wird ein NIR Linienlaser mit einer Wellenlänge von 940 nm eingesetzt. Dieser wurde mit einem Fügedruck von ca. 20N/cm angepresst. Besonders vorteilhaft ist es für das Lasertransmissionsschweißen, wenn der Polymerschaum 2 das Laserlicht ganz oder teilweise absorbiert (üblicherweise liegt die Absorption bei > 70%), während die Grundstruktur 3 für das Laserlicht ganz oder weitgehend transparent ist. Dies wurde im Beispiel durch Färben des Polymerschaums realisiert, wo ein anthrazitfarbener Schaum zum Einsatz kam. Durch die Wahl eines Grundgewebes aus Polyester konnte das Laserlicht zuerst die Grundstruktur 3 durchdringen, und wurde danach durch den Polymerschaum absorbiert. So wurde die zum Verschweißen notwendige Hitze an der Verbindungsstelle zwischen Grundstruktur 3 und Schaumlage 2 erzeugt. Dies ist ein übliches Prinzip im Lasertransmissionschweißen.

Das so verbundene Laminat wurde dann bei einer Temperatur von ca. 190° unter Druck kompaktiert.

Die Figuren 1b und 1c zeigen eine erfindungsgemäße Bespannung, die zusätzlich zu den in Figur 1a beschriebenen Komponenten noch eine oder mehrere zusätzliche Funktionsstrukturen 6, 6a, 6b aufweisen. Diese sind hier als Faservlieslagen ausgeführt, jedoch sind auch andere Funktionsstrukturen wie z.B. Folien, Membranen, Schaumlagen oder ähnliches denkbar. Die Bespannung in Figur 1b weist eine Faservlieslage 6 auf, die zwischen der Grundstruktur 3 und der Schaumlage 2 angeordnet ist.

Die in Figur 1c dargestellte Bespannung weist drei Faservlieslagen 6, 6a, 6b aus, wobei die einzelnen Faservlieslagen in diesem Beispiel Fasern mit unterschiedlicher Feinheit umfassen können.

Zur weiteren Verdeutlichung wird anhand des folgenden Beispiels 1 eine mögliche Herstellung eines Pressbandes, wie in Figur 1c dargestellt, näher erläutert. Das beschriebene Herstellungsverfahren ist zwar vorteilhaft, jedoch ist die Erfindung nicht auf dieses exemplarische Verfahren beschränkt.

In Beispiel 1 wurde zuerst ein Pressfilz mit einem Gewebe 3 und drei Lagen Faservlies 6, 6a, 6b aus einem Polyamidmaterial hergestellt. Die Vlieslagen wurden mit dem Gewebe 3 durch Vernadelung verbunden. Dieser Filz wies ein Flächengewicht von 1100 g/m² und eine Permeabilität von ca. 0.319 m³/m²*s (62,8 CFM) auf. Weiterhin wurde ein offenzelliger Polyurethan (PU) Weichschaum verwendet. Dieser Weichschaum hatte bei einem Flächengewicht von 120 g/m² eine Dicke von 4mm und eine Porendichte von 11,8 Poren pro Zentimeter (30 PPI). Der PU Weichschaum war in Beispiel 1 anthrazitfarbig und für die Strahlung eines NIR Lasers im Bereich von 940 nm absorbierend. Die Verbindung der Schaumlage erfolgte mittels NIR Lasertransmissionsschweißen. hierzu wurde der Laser auf die Laufseite des Bandes gerichtet. Das Polyamidmaterial des ursprünglichen Filzes war für das Laserlicht nahezu transparent, wurde jedoch von der Schaumlage an der Grenzfläche zur Vliesfaserlage unter Hitzeentwicklung absorbiert. Das Material zumindest einer der beiden in Kontakt stehenden Lagen wurde dadurch aufgeschmolzen, wodurch es zu einem Verschweißen der Lagen kam. Unterstützt wurde der Schweißvorgang dadurch, dass auf den Sandwich von Filz und Schaumlage noch ein gewisser Fügedruck ausgeübt wurde. Dieser Fügedruck wurde dadurch realisiert, dass die Rollenoptik des Lasers bei einer Linienbreite von 31mm mit 25 N auf den Filz-Schaum-Sandwich drückte, der auf einer festen Fläche gelagert war. Die Leistung des Lasers betrug im Beispiel 1 350 W.

Nachdem das komplette Pressband verschweißt war, wurde die Schaumlage noch kompaktiert. Diese Kompaktierung erfolgte bei einer Linienlast von 6 KN/m und einer Temperatur von 195°C. Diese Werte können je nach Anwendung unterschiedlich gewählt werden. Ein üblicher Temperaturbereich für die Kompaktierung liegt zwischen 150°C und 210°C. Auch die Linienlast kann höher oder niedriger gewählt werden.

Das so erhaltene Pressband aus Beispiel 1 hatte ein Flächengewicht von 1229 g/m² und eine Permeabilität von 0.324 m³/m^{2*}s (63.7 CFM). Die Poren der Weichschaumlage wiesen durch die Kompaktierung eine anisotrope Struktur auf. Bei einer Belastung von 3 MPa wurde die Schaumlage um mehr als 30% komprimiert.

Bei Versuchen der Anmelderin konnte auch mit dem im Beispiel 1 beschriebenen Pressband ein überraschend höherer Trockengehalt in einem Papier erzielt werden, als mit vergleichbaren Filzen ohne papierberührende Schaumlage 2.

Figur 2 zeigt eine schematische Darstellung einer Erfindungsgemäßen Bespannung, bei der die Grundstruktur 3a durch eine permeable Folienstruktur 3a zur Verfügung gestellt wird. Dabei kann es sich bei der Folienstruktur 3a um eine einzelne, perforierte Folie handeln. Alternativ kann eine solche Folienstruktur selbst aus einem Laminat verschiedener Folien aufgebaut sein. Die Verbindung von Schaumlage 2 und Grundstruktur 3a kann dabei beispielsweise durch Schweißen, oder durch Verkleben erfolgen.

## Patentansprüche

1. Bespannung (1), in Form eines Pressbandes für eine Maschine zur Herstellung oder Verarbeitung einer Papierbahn, wobei die Bespannung (1) eine Papierseite (5) und eine Laufseite aufweist, umfassend eine Grundstruktur (3) und zumindest eine weitere Struktur (2) wobei die zumindest eine weitere Struktur (2) aus einer Lage aus Polymerschaum (2) besteht oder diese umfasst, und diese Lage aus Polymerschaum (2) die Papierseite (5) der Bespannung (1) bereitstellt, und wobei bei einer Druckbelastung der Bespannung (1) von 3 MPa die Lage aus Polymerschaum (2) in Dickenrichtung um mehr als 30%, bevorzugt um mehr als 40% komprimiert wird, verglichen mit der Ausgangsdicke bei einer Druckbelastung von 0.1 MPa, **dadurch gekennzeichnet, dass** die Bespannung (1) eine Permeabilität zwischen 0.0508 m³/m²*s (10 cfm) und 1.27 m³/m²*s (250 cfm), insbesondere zwischen 0.127 m³/m²*s (25 cfm) und 0.762 m³/m²*s (150 cfm) aufweist, und die zumindest eine Lage aus Polymerschaum (2) eine anisotrope Porenstruktur aufweist.

2. Bespannung (1) gemäß Anspruch 1, **dadurch gekennzeichnet, dass** die Bespannung (1) zumindest eine zusätzliche Funktionsstruktur (6, 6a, 6b) umfasst, die zwischen der Grundstruktur (3) und der Lage aus Polymerschaum (2) und/oder an der papierabgewandten Seite der Grundstruktur (3) angeordnet ist, wobei diese zusätzliche Funktionsstruktur (6, 6a, 6b) insbesondere Vliesfasern umfasst oder daraus besteht.

3. Bespannung (1) gemäß einem der vorherigen Ansprüche, **dadurch gekennzeichnet, dass** bei einer Druckbelastung der Bespannung (1) von 3 MPa die Lage aus Polymerschaum (2) in Dickenrichtung um mehr als 50% komprimiert wird, verglichen mit der Ausgangsdicke bei einer Druckbelastung von 0.1 MPa.

4. Bespannung (1) gemäß einem der vorherigen Ansprüche, **dadurch gekennzeichnet, dass** bei einer anschließenden Druckentlastung der Bespannung (1) von 3MPa auf 0.1 MPa die Lage aus Polymerschaum (2) im Wesentlichen wieder auf ihre Ausgangsdicke expandiert.

5. Bespannung (1) gemäß einem der vorherigen Ansprüche, **dadurch gekennzeichnet, dass** die Lage aus Polymerschaum (2) aus einem retikulierten Polyurethan Weichschaum besteht, oder dieses umfasst.

6. Bespannung (1) gemäß einem der vorherigen Ansprüche, **dadurch gekennzeichnet, dass** die Lage aus Polymerschaum (2) eine Rohdichte zwischen 100 kg/m³ und 700 kg/m³ aufweist.

7. Bespannung (1) gemäß einem der vorherigen Ansprüche, **dadurch gekennzeichnet, dass** die Grundstruktur (2) ein Gewebe, ein Gelege oder eine permeable Folienstruktur umfasst oder daraus besteht.

8. Bespannung (1) gemäß einem der vorherigen Ansprüche, **dadurch gekennzeichnet, dass** auf beiden Seiten der Grundstruktur (3), also in Richtung der Faserstoffbahn und in Richtung der Maschine jeweils zumindest eine Lage aus Polymerschaum (2) vorgesehen ist.

9. Verfahren zur Herstellung einer Bespannung (1) gemäß einen der Ansprüche 1-8, umfassend die Schritte:
a) Bereitstellen einer Grundstruktur (3),
b) Bereitstellen zumindest einer weiteren Struktur (2),
c) Verbinden der zumindest einen weiteren Struktur (2) und der Grundstruktur (3), wobei die weitere Struktur (2) aus einer Lage aus Polymerschaum (2) besteht oder diese umfasst und diese die papierberührende Seite (5) der Bespannung (1) zur Verfügung stellt und das Verfahren zudem den Schritt umfasst:
d) Kompaktieren der Lage aus Polymerschaum (2) unter dem Einfluss von Druck und/oder Temperatur.

10. Verfahren gemäß Anspruch 9, **dadurch gekennzeichnet, dass** das Verfahren zusätzlich den Schritt umfasst:
b1) Bereitstellen einer zusätzlichen Funktionsstruktur (6, 6a, 6b) und Anordnen dieser zusätzlichen Funktionsstruktur (6, 6a, 6b) zwischen der Grundstruktur (3) und der Lage aus Polymerschaum (2) und/oder an der papierabgewandten Seite der Grundstruktur (3).

11. Verfahren gemäß Anspruch 10, **dadurch gekennzeichnet, dass** die zusätzliche Funktionsstruktur (6, 6a, 6b) Vliesfasern umfasst oder daraus besteht.

12. Verfahren gemäß einem der Ansprüche 9 bis 11, **dadurch gekennzeichnet, dass** das Kompaktieren der Lage aus Polymerschaum (2) vor und/oder nach dem Verbinden der Lage aus Polymerschaum (2) mit der Grundstruktur (3) erfolgt.

13. Verfahren gemäß einem der Ansprüche 9 bis 12, **dadurch gekennzeichnet, dass** die Dicke der Lage aus Polymerschaum (2) nach dem Kompaktieren weniger als 30%, bevorzugt weniger als 25%, besonders bevorzugt weniger als 20% der Ausgangsdicke beträgt.

14. Verwendung einer Bespannung (1) nach einem der Ansprüche 1 bis 8 als Pressband (1), in der Pressenpartie einer Maschine zur Herstellung einer Papierbahn.

## Claims

1. Fabric (1) in the form of a press belt for a machine for producing or processing a paper web, the fabric (1) having a paper side (5) and a backing side, comprising a base fabric (3) and at least one further structure (2), wherein the at least one further structure (2) consists of or comprises a layer of polymer foam (2), and this layer of polymer foam (2) provides the paper side (5) of the fabric (1), and wherein with a compressive loading of the fabric (1) of 3 MPa, the layer of polymer foam (2) is compressed in the thickness direction by more than 30%, preferably by more than 40%, compared with the initial thickness under a compressive loading of 0.1 MPa, **characterized in that** the fabric (1) has a permeability between 0.0508 m³/m²*s (10CFM) and 1.27 m³/m²*s (250 CFM), in particular between 0.127 m³/m²*s (25 CFM) and 0.762 m³/m^{2*}s (150 CFM) and the at least one layer of polymer foam (2) has an anisotropic pore structure.

2. Fabric (1) according to Claim 1 **characterized in that** the fabric (1) comprises at least one additional functional structure (6, 6a, 6b), which is arranged between the base fabric (3) and the layer of polymer foam (2) and/or on the side of the base fabric (3) that faces away from the paper, wherein this additional functional structure (6, 6a, 6b) in particular comprises or consists of nonwoven fibers.

3. Fabric (1) according to one of the preceding claims, **characterized in that** with a compressive loading of the fabric (1) of 3 MPa, the layer of polymer foam (2) is compressed in the thickness direction by more than 50%, compared with the initial thickness under a compressive loading of 0.1 MPa.

4. Fabric (1) according to one of the preceding claims, **characterized in that** when the compressive loading of the fabric (1) of 3 MPa is subsequently relieved to 0.1 MPa, the layer of polymer foam (2) substantially expands again to its initial thickness.

5. Fabric (1) according to one of the preceding claims, **characterized in that** the layer of polymer foam (2) consists of or comprises a reticulated soft polyurethane foam.

6. Fabric (1) according to one of the preceding claims, **characterized in that** the layer of polymer foam (2) has a bulk density between 100 kg/m³ and 700 kg/m³.

7. Fabric (1) according to one of the preceding claims, **characterized in that** the base fabric (2) comprises or consists of a woven fabric, a laid fabric or a permeable film structure.

8. Fabric (1) according to one of the preceding claims, **characterized in that** at least one layer of polymer foam (2) is provided respectively on both sides of the base fabric (3), that is to say in the direction of the fibrous web and in the direction of the machine.

9. Method for producing a fabric (1) according to one of Claims 1-8, comprising the steps:
a) providing a base fabric (3),
b) providing at least one further structure (2),
c) joining the at least one further structure (2) and the base fabric (3),
**wherein** the further structure (2) consists of or comprises a layer of polymer foam (2) and this provides the side (5) of the fabric (1) that contacts the paper, and the method additionally comprises the step:
d) compacting the layer of polymer foam (2) under the influence of pressure and/or temperature.

10. Method according to Claim 9, **characterized in that** the method additionally comprises the step:
b1) providing an additional functional structure (6, 6a, 6b) and arranging this additional functional structure (6, 6a, 6b) between the base fabric (3) and the layer of polymer foam (2) and/or on the side of the base fabric (3) that faces away from the paper.

11. Method according to Claim 10, **characterized in that** the additional functional structure (6, 6a, 6b) comprises or consists of nonwoven fibers.

12. Method according to one of Claims 9 to 11, **characterized in that** the compaction of the layer of polymer foam (2) is carried out before and/or after the joining of the layer of polymer foam (2) to the base fabric (3).

13. Method according to one of Claims 9 to 12, **characterized in that** the thickness of the layer of polymer foam (2) following the compaction is less than 30%, preferably less than 25%, particularly preferably less than 20%, of the initial thickness.

14. Use of a fabric (1) according to one of Claims 1 to 8 as a press belt (1) in the press section of a machine for producing a paper web.

## Revendications

1. Entoilage (1) sous la forme d'une bande de pressage pour une machine servant à la fabrication ou à la transformation d'une feuille continue de papier, l'entoilage (1) possédant un côté papier (5) et un côté défilement, comprenant une structure de base (3) et au moins une structure supplémentaire (2), l'au moins une structure supplémentaire (2) se composant d'une couche en mousse de polymère (2) ou comportant celle-ci, et cette couche en mousse de polymère (2) fournissant le côté papier (5) de l'entoilage (1), et lors d'une mise en charge de pression de l'entoilage (1) à 3 MPa, la couche en mousse de polymère (2) est comprimée dans le sens de l'épaisseur de plus de 30 %, de préférence de plus de 40 %, par rapport à l'épaisseur initiale avec une mise en charge de pression de 0,1 MPa, **caractérisé en ce que** l'entoilage (1) présente une perméabilité comprise entre 0,0508 m³/m².s (10 cfm) et 1,27 m³/m².s (250 cfm), notamment entre 0,127 m³/m².s (25 cfm) et 0,762 m³/m².s (150 cfm), et l'au moins une couche en mousse de polymère (2) présente une structure de pore anisotrope.

2. Entoilage (1) selon la revendication 1, **caractérisé en ce que** l'entoilage (1) comporte au moins une structure fonctionnelle (6, 6a, 6b) supplémentaire qui est disposée entre la structure de base (3) et la couche en mousse de polymère (2) et/ou du côté de la structure de base (3) à l'opposé du papier, cette structure fonctionnelle (6, 6a, 6b) supplémentaire comprenant notamment des fibres d'étoffe ou en étant composée.

3. Entoilage (1) selon l'une des revendications précédentes, **caractérisé en ce que** lors d'une mise en charge de pression de l'entoilage (1) à 3 MPa, la couche en mousse de polymère (2) est comprimée dans le sens de l'épaisseur de plus de 50 % par rapport à l'épaisseur initiale avec une mise en charge de pression de 0,1 MPa.

4. Entoilage (1) selon l'une des revendications précédentes, **caractérisé en ce que** lors d'un soulagement de pression subséquent de l'entoilage (1) de 3 MPa à 0,1 MPa, la couche en mousse de polymère (2) s'expanse de nouveau sensiblement à son épaisseur initiale.

5. Entoilage (1) selon l'une des revendications précédentes, **caractérisé en ce que** la couche en mousse de polymère (2) se compose d'une mousse tendre de polyuréthane réticulée ou comporte celle-ci.

6. Entoilage (1) selon l'une des revendications précédentes, **caractérisé en ce que** la couche en mousse de polymère (2) possède une densité brute comprise entre 100 kg/m3 et 700 kg/m3.

7. Entoilage (1) selon l'une des revendications précédentes, **caractérisé en ce que** la structure de base (2) comprend un tissu, une natte ou une structure de film perméable ou en est composée.

8. Entoilage (1) selon l'une des revendications précédentes, **caractérisé en ce qu'**au moins une couche en mousse de polymère (2) se trouve à chaque fois des deux côtés de la structure de base (3), c'est-à-dire en direction de la feuille continue de matière fibreuse et en direction de la machine.

9. Procédé de fabrication d'un entoilage (1) selon l'une des revendications 1 à 8, comprenant les étapes suivantes :
a) fourniture d'une structure de base (3),
b) fourniture d'au moins une structure supplémentaire (2) ,
c) assemblage de l'au moins une structure supplémentaire (2) avec la structure de base (3), la structure supplémentaire (2) se composant d'une couche en mousse de polymère (2) ou comportant celle-ci et celle-ci mettant à disposition le côté (5) en contact avec le papier de l'entoilage (1), et le procédé comprenant en plus l'étape suivante :
d) compactage de la couche en mousse de polymère (2) sous l'influence de la pression et/ou de la température.

10. Procédé selon la revendication 9, **caractérisé en ce que** le procédé comprend en plus l'étape suivante :
b1) fourniture d'une structure fonctionnelle (6, 6a, 6b) supplémentaire et disposition de cette structure fonctionnelle (6, 6a, 6b) supplémentaire entre la structure de base (3) et la couche en mousse de polymère (2) et/ou du côté de la structure de base (3) à l'opposé du papier.

11. Procédé selon la revendication 10, **caractérisé en ce que** la structure fonctionnelle (6, 6a, 6b) supplémentaire comprend des fibres d'étoffe ou en est composée.

12. Procédé selon l'une des revendications 9 à 11, **caractérisé en ce que** le compactage de la couche en mousse de polymère (2) est effectué avant et/ou après l'assemblage de la couche en mousse de polymère (2) avec la structure de base (3).

13. Procédé selon l'une des revendications 9 à 12, **caractérisé en ce que** l'épaisseur de la couche en mousse de polymère (2) après le compactage est inférieure à 30 %, de préférence inférieure à 25 %, notamment de préférence inférieure à 20 % de l'épaisseur initiale.

14. Utilisation d'un entoilage (1) selon l'une des revendications 1 à 8 en tant que bande de pressage (1) dans la partie de pressage d'une machine servant à la fabrication d'une feuille continue de papier.
